# EUROPÄISCHE PATENTSCHRIFT

(11) **EP 1 336 776 B1**
(45) Veröffentlichungstag und Bekanntmachung des Hinweises auf die Patenterteilung: **13.09.2006**
(21) Anmeldenummer: 03002262.8
(22) Anmeldetag: 01.02.2003
(51) Int. Cl.: F16H 63/20

(54) **Stufengetriebe sowie Verfahren zum Wechsel eines Ganges eines Stufengetriebes**
Stepped transmission and shift method for such a transmission
Boîte de vitesses à rapports étagés et méthode de changement de vitesses pour une telle boîte

(30) Priorität: 14.02.2002 DE 10206930
(43) Veröffentlichungstag der Anmeldung: 20.08.2003
(73) Patentinhaber: GETRAG Getriebe- und Zahnradfabrik Hermann Hagenmeyer GmbH & Cie KG, 74199 Untergruppenbach (DE)
(72) Erfinder: Schaefer, Andreas, 74232 Abstatt (DE)
(74) Vertreter: Steil, Christian

(56) Entgegenhaltungen:
- WO-A-02/066870
- DE-A1- 3 008 922
- DE-A1- 4 342 957
- DE-A1- 10 119 748
- DE-A1- 19 530 616
- DE-A1- 19 951 683
- DE-C1- 10 020 451

## Beschreibung

Die folgende Erfindung betrifft ein Stufengetriebe in Vorgelegebauweise, insbesondere für Kraftfahrzeuge, mit einer Schalteinrichtung zum Ein- und Auslegen von Gängen des Stufengetriebes, wobei die Schalteinrichtung eine drehbare und axial verschiebliche Schaltwelle aufweist, die parallel zu Wellen des Stufengetriebes angeordnet ist, und eine Mehrzahl von Schaltfingern aufweist, die radial gegenüber der Schaltwelle vorstehen, wobei die Schalteinrichtung ferner eine Mehrzahl von Schaltgliedern aufweist, die zum Ein- und Auslegen der Gänge in Axialrichtung der Schaltwelle verschieblich oder erschwenkbar gelagert sind, und jeweils eine Mitnahmeöffnung aufweisen, in die jeweils ein Schaltfinger der Schaltwelle eingreifen kann, um das betreffende Schaltglied in Axialrichtung mitzunehmen.

Die vorliegende Erfindung betrifft ferner ein Verfahren zum Wechseln eines Ganges eines Stufengetriebes.

Ein derartiges Stufengetriebe bzw. ein Verfahren zum Wechseln eines Ganges eines solchen Stufengetriebes sind bekannt aus der Druckschrift DE 199 51 683 A1.

Stufengetriebe in Vorgelegebauweise weisen generell eine Mehrzahl von Radsätzen entsprechend einer Mehrzahl von Gängen auf. Ein Rad eines jeden Radsatzes ist in der Regel als Losrad ausgebildet, das mittels einer Schaltkupplung drehfest mit einer das Losrad lagernden Welle verbunden oder hiervon entkoppelt werden kann.

Die Schaltkupplungen werden betätigt, indem eine Schaltmuffe axial versetzt wird. Dies erfolgt durch Schaltglieder wie Schaltgabeln oder Schaltschwingen.

Die Schaltkupplungen von zwei benachbarten Losrädern sind häufig im Rahmen eines Kupplungspaketes zusammengepackt, die mittels einer Schaltmuffe betätigt werden. Die Schaltkupplungen sind in der Regel formschlüssig wirkende Klauenkupplungen mit oder ohne Synchronisierung. Generell können die Schaltkupplungen jedoch auch reibschlüssige Kupplungen sein, beispielsweise Lamellenkupplungen.

Die Schaltglieder zum axialen Versetzen der Schaltmuffen sind Teil einer Schalteinrichtung.

Bei Stufengetrieben für den Längseinbau in Kraftfahrzeugen (Inline-Bauweise, einschließlich Inline-Transaxle) weist die Schalteinrichtung in der Regel eine parallel zu den Wellen des Getriebes verlaufende Schaltwelle auf. Axialbewegungen der Schaltwelle werden über geeignete Mitnehmer (in der Regel Schaltfinger an der Schaltwelle, die in Mitnahmeöffnungen an den Schaltgliedern greifen) auf die Schaltglieder übertragen. Durch Drehbewegungen der Schaltwelle werden die einzelnen Schaltglieder angewählt.

Bei einem herkömmlichen Handschaltgetriebe entspricht folglich eine Bewegung des Handschalthebels in einer der Schaltgassen einer Längsbewegung der Schaltwelle. Eine Betätigung des Handschalthebels in Wählrichtung innerhalb der Wählgasse wird in eine Drehbewegung der Schaltwelle umgesetzt.

Ein Beispiel einer derartigen Schalteinrichtung ist aus der eingangs genannten DE 199 51 683 A1 bekannt. Dabei ist zusätzlich eine Sperreinrichtung vorgesehen, die verhindert, daß zwei Gänge gleichzeitig eingelegt werden.

Eine ähnliche Schalteinrichtung ist ferner aus der EP 0 530 466 B1 bekannt. Hier ist als Sperrelement eine parallel zur Schaltwelle gelagerte Sperrwelle vorgesehen.

Bei der Konstruktion von sogenannten automatisierten Schaltgetrieben ist es möglich, die Schalteinrichtung elektromechanisch oder hydraulisch zu betätigen. Elektro-mechanische Systeme benötigen hohe Schaltzeiten. Es muß dreimal ein Elektromotor beschleunigt und wieder abgebremst werden, nämlich zum Auslegen eines Ganges, zum Anwählen eines neuen Schaltgliedes und zum Einlegen des Zielganges. Aufgrund der beim Gangwechsel geöffneten Anfahr- und Trennkupplung ergibt sich ein langer Zugkrafteinbruch.

Hydraulische Stellsysteme sind schneller, aber aufwendig in der Herstellung und teuer.

Aus diesem Grund sind bei automatisierten Schaltgetrieben die Schalteinrichtungen häufig mit Schaltwalzen realisiert.

Ein derartiges System ist beispielsweise aus der DE 195 16 651 A1 bekannt. Bei einem derartigen schaltwalzengesteuerten Getriebe entfällt zwar der Wählvorgang. Es kann jedoch nur sequenziell geschaltet werden, es besteht mit anderen Worten keine Wählfreiheit.

Zur Überwindung dieses Problems ist es ferner bekannt (DE 199 20 440 A1), zwei Schaltwalzen vorzusehen, die abwechselnd betrieben werden.

Generell ist jedoch auch der Schaltungswirkungsgrad bei einer Schaltwalze geringer, da Reibung zwischen dem Schaltglied und dem Gleitstein auftritt. Ferner müssen die Schaltglieder Radialkräfte der Schaltwalze abstützen.

Zudem ist es von Nachteil, daß Schalteinrichtungen mit Schaltwalze einen gegenüber einem herkömmlichen Handschaltgetriebe geänderten Radsatzaufbau und andere Schaltungsteile erfordern.

Vor dem obigen Hintergrund ist es die Aufgabe der Erfindung, ein verbessertes Stufengetriebe bzw. ein verbessertes Verfahren zum Schalten eines Stufengetriebes anzugeben, das bei einfachem konstruktivem Aufbau kurze Schaltzeiten zuläßt.

Diese Aufgabe wird bei dem eingangs genannten Stufengetriebe dadurch gelöst, daß die axiale Erstreckung einer Mitnahmeöffnung wenigstens doppelt so groß ist wie die axiale Erstreckung des Schaltfingers, so daß bei einem Gangwechsel von einem Startgang in einen Zielgang die Schaltwelle in eine Neutralposition zurück verschoben werden kann, während der Startgang noch eingelegt ist.

Die obige Aufgabe wird ferner gelöst durch ein Verfahren zum Wechseln eines Ganges eines derartigen Stufengetriebes, und zwar von einem Startgang in einen Zielgang, der einem anderen Schaltglied als der Startgang zugeordnet ist, wobei das Verfahren die Schritte aufweist:
a) Verschieben der Schaltwelle in eine Neutralposition, ohne den Startgang auszulegen,
b) Verdrehen der Schaltwelle, bis die Drehposition dem anderen Schaltglied entspricht, und
c) Verschieben der Schaltwelle, wobei der Startgang ausgelegt und der Zielgang eingelegt wird.

Mit dem erfindungsgemäßen Stufengetriebe ist es folglich möglich, den Vorgang des axialen Verschiebens der Schaltwelle von der Schaltposition des Startganges zurück in die Neutralposition vorzunehmen, während der Startgang noch eingelegt ist. Folglich kann dieser Vorgang erfolgen, während das Stufengetriebe unter Last steht. Mit anderen Worten kann dieser Vorgang erfolgen, während die dem Stufengetriebe üblicherweise vorgeschaltete Trennkupplung noch geschlossen ist.

Folglich kann die Zeitdauer, während der die Trennkupplung zum Gangwechsel geöffnet werden muß, verkürzt werden. Somit läßt sich der Zugkrafteinbruch beim Gangwechsel verringern.

Es versteht sich, daß diese Art von Schalteinrichtung insbesondere bei einem automatisierten Schaltgetriebe eingesetzt wird. Theoretisch ist jedoch auch die Verwendung in einem Handschaltgetriebe denkbar. Ferner kann das erfindungsgemäße Stufengetriebe auch als Doppelkupplungsgetriebe ausgebildet sein.

Die Aufgabe wird auf diese Weise vollkommen gelöst.

Von besonderem Vorzug ist es, wenn der Zielgang einem anderen Schaltglied zugeordnet ist als der Startgang, und wenn die Schaltwelle verdreht werden kann, um das dem Zielgang entsprechende Schaltglied anzuwählen, während der Startgang noch eingelegt ist.

Bei dieser Ausführungsform erfolgt bei noch eingelegtem Startgang nicht nur das Zurückversetzen der Schaltwelle in die Neutralposition. Vielmehr wird auch noch das Schaltglied des Zielganges angewählt, durch geeignete Drehbewegung der Schaltwelle. All dies kann noch bei geschlossener Trennkupplung erfolgen.

Die dann noch notwendigen Vorgänge des Gangauslegens und des Gangeinlegens erfolgen durch eine reine Axialbewegung der Schaltwelle. Folglich muß beispielsweise bei Verwendung eines Elektromotors als Stellglied der Elektromotor nur einmal beschleunigt und wieder abgebremst werden, während die getriebeeingangsseitige Trennkupplung geöffnet ist.

Hierdurch kann die Schaltzeit noch weiter verkürzt werden. Der Zugkrafteinbruch läßt sich folglich verringern.

Gemäß einer weiteren bevorzugten Ausführungsform ist jedem Schaltfinger eine Funktionskontur an der Schaltwelle zugeordnet und jedes Schaltglied weist eine Gegenkontur auf, wobei zwischen den Konturen jeweils ein Koppelelement angeordnet ist.

Hierdurch ist es möglich, Zusatzfunktionen wie eine Sperrfunktion und/oder eine Rastfunktion auf konstruktiv einfache Weise zu realisieren.

Von besonderem Vorzug ist es dabei, wenn die Konturen so gestaltet sind, daß bei einem axialen Verschieben der Schaltwelle zum Einlegen des Zielganges zunächst der Startgang ausgelegt wird.

Die Funktionskontur ist mit anderen Worten so beschaffen, daß bei dem axialen Verschieben der Schaltwelle das Koppelglied so auf das Schaltglied des Startganges einwirkt, so daß dieser ausgelegt wird.

Auf diese Weise ist eine hohe Funktionssicherheit gewährleistet.

Ferner sind keine separaten Stellglieder zum Auslegen des Startganges und Einlegen des Zielganges erforderlich.

Gemäß einer weiteren bevorzugten Ausführungsform sind die Konturen so gestaltet, daß bei einem eingelegten Gang alle anderen Gänge gegen Einlegen gesperrt sind.

Mit anderen Worten sind die Konturen so ausgeformt, daß ein axialer Versatz der Schaltglieder, die nicht dem eingelegten Gang zugeordnet sind, ausgeschlossen ist.

Hierdurch wird die Funktionssicherheit des erfindungsgemäßen Stufengetriebes bei einfacher konstruktiver Ausgestaltung weiter erhöht.

In einer besonders bevorzugten Ausgestaltung sind die Koppelelemente gehäusefest in einer Richtung quer zur Schaltwellenachse verschieblich gelagert.

Hierdurch ist es auf konstruktiv einfache Weise möglich, die Konturen der Schaltwelle einerseits und der Schaltglieder andererseits mechanisch zu koppeln. Insbesondere ist es nicht notwendig, die Koppelelemente an der Schaltwelle und/oder den Schaltgliedern zu lagern.

Dabei ist es besonders bevorzugt, wenn die Koppelelemente in Richtung hin zu der jeweiligen Gegenkontur an dem Schaltglied elastisch vorgespannt sind.

Auf diese Weise ist in allen Betriebssituationen eine definierte Lage des jeweiligen Koppelelementes gewährleistet. Ferner dient diese Ausgestaltung auch dazu, das Schaltglied durch die elastische Vorspannung nach der Art einer Rastierung in den jeweiligen Positionen (Neutralposition und gegebenenfalls ein oder zwei Schaltpositionen) zu fixieren.

Gemäß einer besonders bevorzugten Ausführungsform weisen die Gegenkonturen jeweils eine V-Ausnehmung auf, deren Mittenachse quer zur Schaltwellenachse verläuft.

Auf diese Weise kann die Gegenkontur jeweils als Rastkontur verwendet werden, um die axiale Position des zugehörigen Schaltgliedes rastend festzulegen.

Bei einer weiteren bevorzugten Ausführungsform weisen die Funktionskonturen jeweils eine der Neutralstellung zugeordnete V-Ausnehmung auf, deren Mittenachse quer zur Schaltwellenachse verläuft.

Bei dieser Ausgestaltung ist es möglich, die Schaltwelle in der Neutralstellung frei zu verdrehen, um beliebige Wählvorgänge durchzuführen, auch wenn noch ein Startgang eingelegt ist.

Insgesamt ist es ferner bevorzugt, wenn die Funktionskonturen der Schaltwelle jeweils eine Längsausnehmung aufweisen, wobei das Koppelelement bei eingelegtem Gang in die Längsausnehmung jener Funktionskontur eingreift, die dem Schaltglied zugeordnet ist, das dem eingelegten Gang zugeordnet ist.

Hierdurch kann das Koppelelement beim Einlegen des Ganges in die Längsausnehmung ausweichen, während es von der V-Ausnehmung an der Gegenkontur des Schaltgliedes zur Schaltwelle hin gedrückt wird.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Draufsicht auf einen Ausschnitt einer Schalteinrichtung des erfindungsgemäßen Stufengetriebes in der Neutralposition;
- Fig. 2: eine schematische Schnittansicht entlang der Linie II-II in Fig. 1;
- Fig. 3: eine schematische Schnittansicht entlang der Linie III-III in Fig. 1;
- Fig. 4: eine Draufsicht auf die Schalteinrichtung der Fig. 1, wobei ein Gang eingelegt ist;
- Fig. 5: eine Schnittansicht entlang der Linie V-V in Fig. 4;
- Fig. 6: eine Schnittansicht entlang der Linie VI-VI in Fig. 4;
- Fig. 7: eine Draufsicht auf die Schalteinrichtung der Fig. 4, wobei der dort eingelegte Startgang noch eingelegt ist, die Schaltwelle jedoch in die Neutralposition zurück verschoben ist;
- Fig. 8: eine Schnittansicht entlang der Linie VIII-VIII in Fig. 7;
- Fig. 9: eine Schnittansicht entlang der Linie IX-IX in Fig. 7;
- Fig. 10: eine Draufsicht auf die Schalteinrichtung der Fig 7, nachdem die Schaltwelle zur Auswahl eines Schaltgliedes eines Zielganges verdreht worden ist;
- Fig. 11: eine Schnittansicht entlang der Linie XI-XI in Fig. 10;
- Fig. 12: eine Schnittansicht entlang der Linie XII-XII in Fig. 10;
- Fig. 13: eine Draufsicht auf die Schalteinrichtung der Fig. 11, nachdem der Zielgang eingelegt ist;
- Fig. 14: eine Schnittansicht entlang der Linie XIV-XIV in Fig. 13;
- Fig. 15: eine Schnittansicht entlang der Linie XV-XV in Fig. 13; und
- Fig. 16: eine schematische perspektivische Ansicht einer Ausführungsform einer Schalteinrichtung in Zuordnung zu einer schematischen Darstellung eines Antriebsstranges eines Kraftfahrzeuges.

In Fig. 16 ist ein Antriebsstrang für ein Kraftfahrzeug, insbesondere für einen Personenkraftwagen, generell mit 10 bezeichnet.

Der Antriebsstrang 10 weist einen Verbrennungsmotor 12 auf, der über eine Anfahr- und Trennkupplung 14 mit einem Stufengetriebe 15 in Vorgelegebauweise gekoppelt ist.

Das Stufengetriebe 15 weist eine Getriebeeingangswelle 16 auf. Der Kraftfluß geht vom Getriebeeingang über eine Konstante 18 auf eine Vorgelegewelle 20.

In dem Getriebe 15 sind ein erster Radsatz 22, ein zweiter Radsatz 24, ein dritter Radsatz 26 und ein vierter Radsatz 28 vorgesehen. Aus Gründen einer übersichtlicheren Darstellung sind lediglich diese vier Radsätze dargestellt. Es versteht sich jedoch, daß die Anzahl der Radsätze je nach Anzahl der Gänge unterschiedlich sein kann. Bei einem Sechsganggetriebe sind gewöhnlich sieben Radsätze (sechs Vorwärtsgänge plus ein Rückwärtsgang) vorgesehen. Das Stufengetriebe kann jedoch auch weniger oder noch mehr Gänge aufweisen.

Jeder der Radsätze 22-28 weist ein an der Vorgelegewelle 20 festgelegtes Festrad und ein Losrad auf. Die Losräder der Radsätze 22-28 sind im vorliegenden Fall an einer Getriebeausgangswelle 30 drehbar gelagert.

Es versteht sich jedoch, daß die Losräder alternativ auch an der Vorgelegewelle gelagert sein können und die Festräder an der Getriebeausgangswelle 30.

Die Getriebeausgangswelle 30 ist in der gleichen Achse angeordnet wie die Getriebeeingangswelle 16. Es handelt sich vorwiegend um ein Stufengetriebe für den Längseinbau im Kraftfahrzeug.

An der Getriebeausgangswelle 30 sind ferner zwei Synchronpakete 32, 34 vorgesehen. Das Synchronpaket 32 weist zwei Synchron-Schaltkupplungen auf, die zum formschlüssigen Verbinden der Getriebeausgangswelle 30 mit den Losrädern der Radsätze 22 bzw. 24 dienen. Entsprechend weist das Synchronpaket 34 zwei Schaltkupplungen auf, die zum drehfesten Verbinden der Losräder der Radsätze 26, 28 mit der Getriebeausgangswelle 30 dienen.

Die Synchronpakete 32, 34 weisen in an sich bekannter Weise Schaltmuffen auf (nicht dargestellt), die an der Getriebeausgangswelle 30 axial versetzbar sind, um die eine oder die andere Schaltkupplung zu schließen bzw. zu öffnen.

Die Synchronpakete 32, 34 werden von einer Schalteinrichtung betätigt, die generell mit 40 bezeichnet ist.

Die Schalteinrichtung 40 weist eine parallel zu den Wellen 16, 20, 30 angeordnete Schaltwelle 42 auf. Die Schaltwelle 42 kann mittels eines schematisch angedeuteten Aktuators 41 in Längsrichtung entlang einer Schaltwellenachse 43 verschoben und um die Schaltwellenachse 43 verdreht werden.

Die Schalteinrichtung 40 weist ferner eine Mehrzahl von Schaltgliedern in Form von Schaltschwingen 44, 46 auf. Von diesen Schaltgliedern sind in Fig. 16 lediglich zwei gezeigt, die dem Synchronpaket 32 bzw. dem Synchronpaket 34 zugeordnet sind.

Anstelle von Schaltschwingen können auch Schaltgabeln vorgesehen sein.

An der Schaltwelle 42 ist eine Mehrzahl von Schaltfingern 48, 50 vorgesehen, die sich radial nach außen gegenüber der Schaltwelle 42 erstrecken. Diese können einstückig mit der Schaltwelle 42 ausgebildet oder mit der Schaltwelle 42 verbunden sein.

Entsprechend weisen die Schaltschwingen 44, 46 jeweils einen Mitnehmer 52 bzw. 54 auf. Die Mitnehmer 52, 54 weisen jeweils einen Mitnahmerachen 56, 58 auf, die jeweils einem Schaltfinger 48, 50 zugeordnet sind.

Die Schaltfinger 48, 50 und die Mitnehmer 52, 54 erstrecken sich in Umfangsrichtung so, daß jeweils nur ein Schaltfinger 48, 50 zur Zeit in seinen zugeordneten Mitnehmerrachen 56, 58 ragt. In Fig. 16 beispielsweise ragt der Schaltfinger 50 in den Mitnehmerrachen 58. Der Schaltfinger 48 ragt hingegen nicht in seinen zugeordneten Mitnehmerrachen 56.

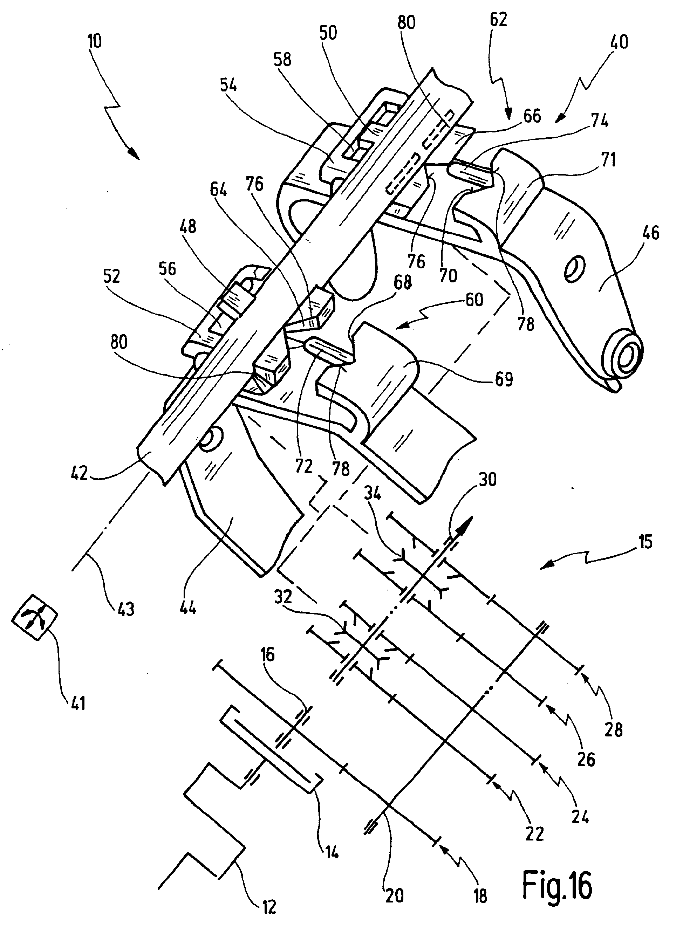

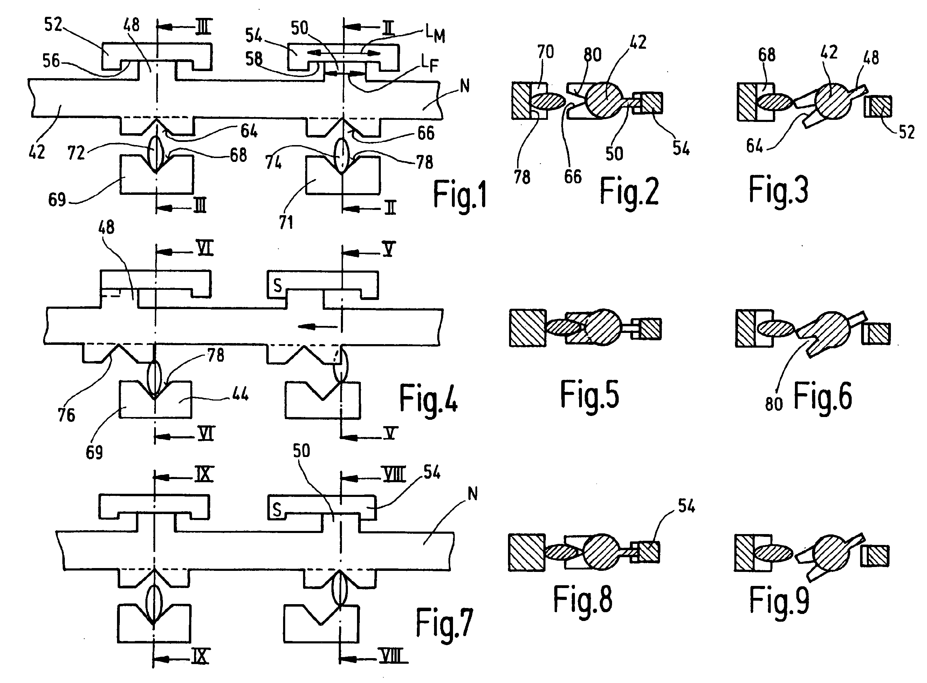

Die axiale Erstreckung der Mitnehmerrachen 56, 58 ist deutlich größer als die axiale Erstreckung der Schaltfinger 48, 50, wie es auch schematisch in Fig. 1 zu sehen ist.

In Fig. 1 ist die axiale Erstreckung der Mitnehmerrachen 56, 58 generell mit L_{M} bezeichnet, die axiale Erstreckung der Schaltfinger 48, 50 mit L_{F}.

Folglich vollziehen die Schaltfinger bei einem axialen Versatz der Schaltwelle 42 aus der in den Figuren 1 und 16 gezeigten Neutralposition zunächst einen "Leerweg", bevor ein Schaltfinger seinen jeweiligen Mitnehmer 52, 54 in axialer Richtung mitnimmt. Wie nachstehend noch erläutert werden wird, dient dieser Leerweg zum Auslegen eines gegebenenfalls noch eingelegten Ganges.

Demzufolge ergibt sich jedoch auch, daß der Schaltweg in axialer Richtung üblicherweise länger ist, im vorliegenden Beispiel doppelt so lang, als der Schaltweg bei herkömmlichen Schalteinrichtungen.

Der Schaltschwinge 44 ist eine Sperreinrichtung 60 zugeordnet. Der Schaltschwinge 46 ist eine Sperreinrichtung 62 zugeordnet. Diese Sperreinrichtungen 60, 62 werden wie folgt realisiert.

Jedem der Schaltfinger 48, 50 ist an der Schaltwelle 42 eine gegenüberliegende Funktionskontur 64 bzw. 66 zugeordnet. Die Funktionskontur kann durch einstückig an die Schaltwelle 42 angeformte Elemente oder durch separate, daran angebrachte Elemente gebildet sein.

Entsprechend ist an jeder der Schaltschwingen 44, 46 eine Gegenkontur 68 bzw. 70 vorgesehen. Die Gegenkonturen 68, 70 sind jeweils an einem vorstehenden Arm 69 bzw. 71 der Schaltschwingen 44, 46 vorgesehen.

Zwischen den Konturen 64-68, 66-70 ist jeweils ein Koppelelement in Form einer Sperrbohne 72 bzw. 74 angeordnet.

Die Sperrbohnen 72, 74 sind an dem Stufengetriebe 15 gelagert. Die Sperrbohnen 72, 74 sind in Richtung quer zur Schaltwelle 42 verschieblich gelagert. Nicht näher dargestellte elastische Vorspannmittel dienen dazu, die Sperrbohnen 72, 74 in Richtung von der Schaltwelle 42 weg vorzuspannen.

Die Funktionskonturen 64, 66 weisen eine mittige, der Neutralstellung N zugeordnete V-Ausnehmung 76 auf, die sich in Umfangsrichtung erstreckt. Entsprechend weisen die Gegenkonturen 68, 70 eine V-Ausnehmung 78 auf. Die Konturen 64, 68 bzw. 66, 70 sind derart voneinander beabstandet, daß die jeweilige Sperrbohne 72, 74, wenn sie in einer der V-Ausnehmungen 76 oder 78 ist, gerade bis zum nicht-V-förmig ausgenommenen Abschnitt der jeweiligen anderen Kontur reicht. Dies ist insbesondere in den Figuren 1, 4, 7, 10 und 13 zu entnehmen, auf die weiter unten eingegangen wird.

Ferner weisen die Funktionskonturen 64, 66 der Schaltwelle 42 jeweils eine Längsausnehmung 80 auf. Die Längsausnehmungen 80 sind jeweils in Umfangsrichtung so angeordnet, daß die zugeordnete Sperrbohne 72 bzw. 74 in die Längsausnehmung 80 eingreifen kann, wenn sich der jeweilige Schaltfinger 48, 50 in seinem zugeordneten Mitnehmerrachen 56, 58 befindet. Beispielsweise kann die Sperrbohne 74 in der Darstellung der Fig. 16 in die Längsausnehmung 80 ausweichen, unabhängig von der axialen Stellung der Schaltwelle 42. Denn der Schaltfinger 50 befindet sich in seinem zugeordneten Mitnehmerrachen 56.

Andererseits befindet sich der Schaltfinger 48 nicht in seinem zugeordneten Mitnehmerrachen 56. Folglich ist die Sperrbohne 72 nicht mit der Längsausnehmung 80 der Funktionskontur 64 ausgerichtet. Folglich kann die Sperrbohne 72 in dieser Drehstellung der Schaltwelle 42 nicht in die zugeordnete Längsausnehmung 80 ausweichen, wenn die Schaltwelle 42 gegenüber der Neutralstellung in eine Schaltstellung versetzt wird. Das Schaltglied 44 ist gesperrt.

Nachstehend wird unter Bezugnahme auf die Figuren 1 bis 15 die Betriebsweise des erfindungsgemäßen Stufengetriebes beim Wechseln von einem Startgang S in einen Zielgang Z erläutert.

In Fig. 1 ist eine schematische Draufsicht die Schalteinrichtung 40 der Fig. 16 gezeigt. Die Längs- und Drehstellung der Schaltwelle 42 entspricht der Darstellung der Fig. 16. Fig. 2 zeigt eine Schnittansicht entlang der Linie II-II und Fig. 3 eine Schnittansicht entlang der Linie III-III von Fig. 1.

Es ist zu erkennen, daß die Sperrbohnen 72, 74 elastisch in die V-Ausnehmungen 78 der Gegenkonturen 68 bzw. 70 gedrückt sind. Die Sperrbohnen 72, 74 reichen in dieser Stellung gerade bis zum radial äußersten Punkt der Funktionskonturen 64, 66.

Man erkennt, daß die axiale Erstreckung L_{F} des Schaltfingers 50 etwa halb so groß ist wie die axiale Erstreckung L_{M} des zugeordneten Mitnehmerrachens 58.

Sofern nun ein Gang eingelegt wird, erfolgt zunächst ein Leerweg des Schaltfingers 50 um dessen halbe axiale Erstreckung L_{F}. Anschließend wird der Mitnehmer 54 in axialer Richtung mitgenommen. Dabei wird die Sperrbohne 74 aus der V-Ausnehmung 78 der Gegenkontur 70 herausgedrückt, in die Längsausnehmung 80 der Funktionskontur.

Aufgrund der Drehstellung der Schaltwelle 42 wird der andere Mitnehmer 52 von dieser Axialbewegung nicht beeinflußt.

Da die V-Ausnehmung 76, die dem Schaltfinger 48 zugeordnet ist, seitlich gegenüber der V-Ausnehmung 78 der Schaltschwinge 44 (Arm 69) versetzt ist, kann die Sperrbohne 72 nicht mehr aus der V-Ausnehmung 78 in Richtung hin zur Schaltwelle 42 ausweichen. Folglich ist die Schaltschwinge 44 in diesem Zustand in ihrer Mittenstellung festgelegt. Die von der Schaltschwinge 44 bedienten Gänge sind gesperrt.

Dieser Zustand ist in Fig. 4 gezeigt. Die Figuren 5 und 6 zeigen jeweils den Figuren 2 und 3 entsprechende Schnittansichten.

Ausgehend von dem Zustand der Figuren 4 bis 6 (Startgang S eingelegt) wird nunmehr beschrieben, wie ein Zielgang Z eingelegt wird.

Zunächst wird die Schaltwelle 42 in axialer Richtung in die Neutralstellung N versetzt, wie es in Fig. 7 gezeigt ist. Aufgrund der axialen Erstreckung L_{M} des Mitnehmerrachens 58 nimmt der Schaltfinger 50 hierbei den Mitnehmer 54 nicht mit zurück. Folglich bleibt der Startgang S eingelegt. Dieser Zustand ist in den Figuren 7 bis 9 gezeigt.

Anschließend wird die Schaltwelle 42 gedreht, bis der Schaltfinger 48 in den zugeordneten Mitnehmerrachen 56 ragt. Auch dies beeinflußt nicht den Mitnehmer 54. Der Startgang S bleibt eingelegt. Aufgrund der V-Ausnehmung 76 ist die Schaltwelle 42 dabei verdrehbar.

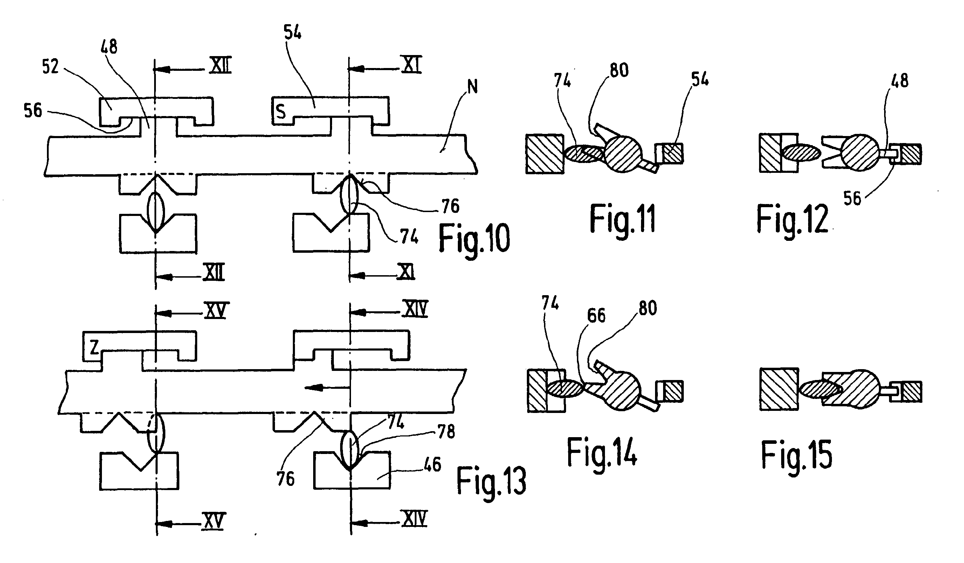

Dieser Zustand ist in den Figuren 10 bis 12 gezeigt.

Die bisherigen Vorgänge ausgehend von dem Zustand der Figuren 4 bis 6 bis hin zum Zustand der Figuren 10 bis 12 können sämtlich erfolgen, ohne die Trennkupplung 14 zu öffnen. Da während der ganzen Zeit der Startgang S eingelegt bleibt, kann weiterhin eine Zugkraft auf die Antriebsräder des Kraftfahrzeuges übertragen werden.

Erst im folgenden, nachstehend erläuterten Schritt erfolgt das Auslegen des Startganges S und das Einlegen des Zielganges Z.

Dabei wird ausgehend von dem Zustand der Figuren 10 bis 12 die Schaltwelle 42 axial versetzt. Da sich die Sperrbohne 74 nicht mehr in der Axialnut 80 befindet, wird sie mittels der V-Ausnehmung 76 von der Schaltwelle 42 radial weggedrückt. Gleichzeitig wird sie in die V-Ausnehmung 78 der Schaltschwinge 46 hineingedrückt. Hierdurch wird das Schaltglied in die mittige Position zurückgedrückt. Der Startgang S wird ausgelegt.

Dies erfolgt innerhalb des "Leerweges" des Schaltfingers 48 innerhalb des Mitnehmerrachens 56, also ohne den Zielgang Z einzulegen. Sobald die Sperrbohne 74 vollständig innerhalb der V-Ausnehmung 78 liegt (der Startgang S ausgelegt ist), nimmt der Sperrfinger 48 den Mitnehmer 52 in axialer Richtung mit und legt den Zielgang Z ein.

Dieser Zustand ist in den Figuren 13 bis 15 gezeigt.

Man erkennt folglich, daß der Vorgang des Auslegens des Startganges S und des Einlegens des Zielganges Z durch eine einzelne Axialbewegung der Schaltwelle 42 erfolgt. Demzufolge kann der Aktuator 41 beispielsweise durch einen Elektromotor gebildet sein, der demzufolge nur einmal beschleunigt und abgebremst werden muß.

Da nur das Auslegen des Startganges S und das Einlegen des Zielganges Z bei geöffneter Trennkupplung erfolgt (also beim Übergang von dem Zustand der Fig. 10 in den Zustand der Fig. 13), ist es nur einmal nötig, den Elektromotor zu beschleunigen und abzubremsen, was in relativ kurzer Zeit erfolgen kann.

Im Stand der Technik hingegen war es bei elektromotorischer Betätigung während der geöffneten Trennkupplungsphase notwendig, die Schaltwelle zunächst zurückzuversetzen, zu verdrehen und anschließend wieder axial zu versetzen, was drei Beschleunigungs- und Verzögerungsvorgänge notwendig machte.

Es versteht sich, daß mit der vorliegenden Schalteinrichtung 40 eine Schaltwellenstellung realisiert werden kann, bei der kein Schaltfinger eingreift und alle Sperrbohnen ihre zugeordneten Schaltschwingen blockieren. Dazu darf sich in dieser Stellung keine Längsausnehmung 80 im Bereich der Sperrbohnen befinden. Es ergibt sich auf diese Weise eine Neutralstellung des Getriebes 15, bei der alle Gänge ausgelegt und gesperrt sind.

Ferner kann die Schalteinrichtung auch für Doppelkupplungsgetriebe verwendet werden. Dabei wären zum Beispiel je zwei Schaltfinger und Auslegekonturen einem Teilgetriebe zugeordnet.

Bei einem Doppelkupplungsgetriebe können ferner verschiedene Auslegestellungen definiert werden, bei denen in den einzelnen Teilgetrieben die Gänge ausgelegt werden. Damit können in dem unbelasteten Teilgetriebe die Gänge ausgelegt werden, um den Wirkungsgrad zu verbessern.

Ferner versteht sich aus dem Vorstehenden, daß die Sperrbohnen eine Sperrwirkung besitzen. Bei geeigneter Konturierung der Längsausnehmung 80 und/oder der Gegenkonturen 68, 70 ist es auch möglich, die Schaltwelle 42 in einer jeweiligen Schaltstellung (bei eingelegtem Gang) zu rastieren. Hierzu müßte beispielsweise die Gegenkonturen 68, 70 jeweils nicht als Längskontur mit radialer V-Ausnehmung, sondern als W-Kontur ausgebildet sein.

Die Mitnahmeöffnungen 56, 58 können auch an der Schaltwelle und die Schaltfinger an den Schaltgliedern vorgesehen sein.

## Patentansprüche

1. Stufengetriebe (15) in Vorgelegebauweise, insbesondere für Kraftfahrzeuge, mit einer Schalteinrichtung (40) zum Ein- und Auslegen von Gängen des Stufengetriebes (15), wobei die Schalteinrichtung (40) eine verdrehbare und axial verschiebliche Schaltwelle (42) aufweist, die parallel zu Wellen (16, 20, 30) des Stufengetriebes (15) angeordnet ist und eine Mehrzahl von Schaltfingern (48, 50) aufweist, die radial gegenüber der Schaltwelle (42) vorstehen, wobei die Schalteinrichtung (40) ferner eine Mehrzahl von Schaltgliedern (44, 46) aufweist, die zum Ein- und Auslegen der Gänge in Axialrichtung der Schaltwelle verschieblich oder verschwenkbar gelagert sind und jeweils eine Mitnahmeöffnung (56, 58) aufweisen, in die jeweils ein Schaltfinger (48, 50) der Schaltwelle (42) eingreifen kann, um das betreffende Schaltglied (44, 46) in die Axialrichtung mitzunehmen,
**dadurch gekennzeichnet, daß**
die axiale Erstreckung (L_{M}) einer Mitnahmeöffnung (56, 58) wenigstens doppelt so groß ist wie die axiale Erstreckung (L_{F}) des Schaltfingers (48, 50), so daß bei einem Gangwechsel von einem Startgang (S) in einen Zielgang (Z) die Schaltwelle (42) in eine Neutralposition (N) zurück verschoben werden kann, während der Startgang (S) noch eingelegt ist.

2. Stufengetriebe nach Anspruch 1, **dadurch gekennzeichnet, daß** der Zielgang (Z) einem anderen Schaltglied (44) zugeordnet ist als der Startgang (S) und daß die Schaltwelle (42) verdreht werden kann, um das dem Zielgang (Z) entsprechende Schaltglied (44) anzuwählen, während der Startgang (S) noch eingelegt ist.

3. Stufengetriebe nach Anspruch 1 oder 2, **dadurch gekennzeichnet, daß** jedem Schaltfinger (48, 50) eine Funktionskontur (64, 66) an der Schaltwelle (42) zugeordnet ist und jedes Schaltglied (44, 46) eine Gegenkontur (68, 70) aufweist, wobei jeweils ein Koppelelement (72, 74) zwischen den Konturen (64-68, 66-70) angeordnet ist.

4. Stufengetriebe nach Anspruch 2 und 3, **dadurch gekennzeichnet, daß** die Konturen (64-68, 66-70) so gestaltet sind, daß bei einem axialen Verschieben der Schaltwelle (42) zum Einlegen des Zielganges (Z) zunächst der Startgang (S) ausgelegt wird.

5. Stufengetriebe nach Anspruch 3 oder 4, **dadurch gekennzeichnet, daß** die Konturen (64-68, 66-70) so gestaltet sind, daß bei einem eingelegtem Gang (S) jeweils alle anderen Gänge gegen Einlegen gesperrt sind.

6. Stufengetriebe nach einem der Ansprüche 3 bis 5, **dadurch gekennzeichnet, daß** die Koppelelemente (72, 74) gehäusefest in einer Richtung quer zur Schaltwellenachse (43) verschieblich gelagert sind.

7. Stufengetriebe nach Anspruch 6, **dadurch gekennzeichnet, daß** die Koppelelemente (72, 74) in Richtung hin zu der jeweiligen Gegenkontur (68, 70) an dem Schaltglied (44, 46) elastisch vorgespannt sind.

8. Stufengetriebe nach einem der Ansprüche 3 bis 7, **dadurch gekennzeichnet, daß** die Gegenkonturen (68, 70) jeweils eine V-Ausnehmung (78) aufweisen, deren Mittenachse quer zur Schaltwellenachse (43) verläuft.

9. Stufengetriebe nach einem der Ansprüche 3 bis 8, **dadurch gekennzeichnet, daß** die Funktionskonturen (64, 66) jeweils eine der Neutralstellung (N) zugeordnete V-Ausnehmung (76) aufweisen, deren Mittenachse quer zur Schaltwellenachse (43) verläuft.

10. Stufengetriebe nach einem der Ansprüche 3 bis 9, **dadurch gekennzeichnet, daß** die Funktionskonturen (64, 66) der Schaltwelle (42) jeweils eine Längsausnehmung (80) aufweisen, wobei das Koppelelement (72, 74) bei eingelegtem Gang in die Längsausnehmung (80) jener Funktionskontur (64, 66) eingreift, die dem Schaltglied (44, 46) zugeordnet ist, das dem eingelegten Gang zugeordnet ist.

11. Verfahren zum Wechseln eines Ganges eines Stufengetriebes (15) in Vorgelegebauweise, insbesondere für Kraftfahrzeuge, wobei das Stufengetriebe (15) eine Schalteinrichtung (40) zum Ein- und Auslegen von Gängen des Stufengetriebes (15) aufweist, wobei die Schalteinrichtung (40) eine verdrehbare und axial verschiebliche Schaltwelle (42) aufweist, die parallel zu Wellen (16, 20, 30) des Stufengetriebes (15) angeordnet ist, und wobei das Verfahren zum Wechseln von einem Startgang (S) in einen Zielgang (Z), der einem anderen Schaltglied (44) als der Startgang (S) zugeordnet ist, die Schritte aufweist:
a) Verschieben der Schaltwelle (42) in eine Neutralposition (N), ohne den Startgang (S) auszulegen,
b) Verdrehen der Schaltwelle (42), bis die Drehposition dem anderen Schaltglied (44) entspricht, und
c) Verschieben der Schaltwelle (42), wobei der Startgang (S) ausgelegt und der Zielgang (Z) eingelegt wird.

## Claims

1. Step-variable transmission (15) of auxiliary transmission type, especially for motor vehicles, having a gear-shifting device (40) for the engagement and disengagement of gears of the step-variable transmission (15), the gear-shifting device (40) having a rotatable and axially displaceable gearshift lever shaft (42), which is arranged parallel to shafts (16, 20, 30) of the step-variable transmission (15) and has a plurality of shift fingers (48, 50), which protrude radially from the gearshift lever shaft (42), the gear-shifting device (40) furthermore having a plurality of gear-shifting elements (44, 46), which for the engagement and disengagement of the gears are supported so that they are displaceable in the axial direction of the gearshift lever shaft or capable of pivoting, and which each have a drive opening (56, 58), in which one shift finger (48, 50) at a time of the gearshift lever shaft (42) can engage, in order to drive the relevant gear-shifting element (44, 46) in the axial direction,
**characterized in that**
the axial extent (L_{M}) of a drive opening (56, 58) is at least twice the axial extent (L_{F}) of the shift finger (48, 50), so that in changing gear from a starting gear (S) into a target gear (Z) the gearshift lever shaft (42) can be displaced back into a neutral position (N) whilst the starting gear (S) is still engaged.

2. Step-variable transmission according to Claim 1, **characterized in that** the target gear (Z) is associated with a different gear-shifting element (44) from the starting gear (S) and that the gearshift lever shaft (42) can be rotated in order to select the gear-shifting element (44) corresponding to the target gear (Z), whilst the starting gear (S) is still engaged.

3. Step-variable transmission according to Claim 1 or 2, **characterized in that** a functional contour (64, 66) on the gearshift lever shaft (42) is associated with each shift finger (48, 50) and each gear-shifting element (44, 46) has a matching contour (68, 70), a coupling element (72, 74) in each case being arranged between the contours (64-68, 66-70).

4. Step-variable transmission according to Claim 2 and 3, **characterized in that** the contours (64-68, 66-70) are designed so that in the event of an axial displacement of the gearshift lever shaft (42) for engagement of the target gear (Z) the starting gear (S) is first disengaged.

5. Step-variable transmission according to Claim 3 or 4, **characterized in that** the contours (64-68, 66-70) are designed so that when a gear (S) is engaged at any time all other gears are locked to prevent their engagement.

6. Step-variable transmission according to any one of Claims 3 to 5, **characterized in that** coupling elements (72, 74), fixed to the housing, are supported so that they are displaceable in a transverse direction to the gearshift lever shaft axis (43).

7. Step-variable transmission according to Claim 6, **characterized in that** the coupling elements (72, 74) are resiliently preloaded in the direction of the respective matching contour (68, 70) on the gear-shifting element (44, 46).

8. Step-variable transmission according to any one of Claims 3 to 7, **characterized in that** the matching contours (68, 70) each have a V-shaped recess (78), the central axis of which runs transversely to the gearshift lever shaft axis (43).

9. Step-variable transmission according to any one of Claims 3 to 8, **characterized in that** the functional contours (64, 66) each have a V-shaped recess (76) associated with the neutral position (N), the central axis of which runs transversely to the gearshift lever shaft axis (43).

10. Step-variable transmission according to any one of Claims 3 to 9, **characterized in that** the functional contours (64, 66) of the gearshift lever shaft (42) each have a longitudinal recess (80), the coupling element (72, 74), when a gear is engaged, engaging in the longitudinal recess (80) of that functional contour (64, 66) associated with the gear-shifting element (44, 46) that is associated with the engaged gear.

11. Method for changing a gear of a step-variable transmission (15) of auxiliary transmission type, especially for motor vehicles, the step-variable transmission (15) having a gear-shifting device (40) for the engagement and disengagement of gears of the step-variable transmission (15), the gear-shifting device (40) having a rotatable and axially displaceable gearshift lever shaft (42), which is arranged parallel to shafts (16, 20, 30) of the step-variable transmission (15), and the method for changing from a starting gear (S) into a target gear (Z), which is associated with a different gear-shifting element (44) from the starting gear (S), comprising the following steps:
a) displacement of the gearshift lever shaft (42) into a neutral position (N) without disengaging the starting gear (S),
b) rotation of the gearshift lever shaft (42) until the rotational position corresponds to the other gear-shifting element (44), and
c) displacement of the gearshift lever shaft (42), thereby disengaging the starting gear (S) and engaging the target gear (Z).

## Revendications

1. Boîte de vitesses (15) à rapports étagés du type engrenage réducteur, en particulier pour des véhicules motorisés, avec un dispositif de commutation (40) servant à enclencher et désenclencher des rapports de la boîte de vitesses à rapports étagés (15), le dispositif de commutation (40) présentant un arbre de commutation (42) rotatif et mobile axialement qui est placé parallèlement à des arbres (16, 20, 30) de la boîte de vitesses (15) et qui présente une pluralité d'ergots de commutation (48, 50) qui forment saillie radialement par rapport à l'arbre de commutation (42), le dispositif de commutation (40) présentant de plus une pluralité d'organes de commutation (44, 46) qui sont montés mobiles dans la direction axiale de l'arbre de commutation ou pivotants pour enclencher et désenclencher les rapports et qui présentent chacun une ouverture d'entraînement (56, 58) dans laquelle peut s'engager à chaque fois un ergot de commutation (48, 50) de l'arbre de commutation (42) afin d'entraîner l'organe de commutation (44, 46) concerné dans la direction axiale,
**caractérisée en ce que** l'extension axiale (L_{M}) d'une ouverture d'entraînement (56, 58) est au moins deux fois plus grande que l'extension axiale (L_{F}) de l'ergot de commutation (48, 50), de sorte que lors d'un changement de rapport d'un rapport de départ (S) à un rapport de destination (Z), l'arbre de commutation (42) peut être ramené dans une position neutre (N) alors que le rapport de départ (S) est encore enclenché.

2. Boîte de vitesses à rapports étagés selon la revendication 1, **caractérisée en ce que** le rapport de destination (Z) est associé à un autre organe de commutation (44) que le rapport de départ (S) et **en ce que** l'arbre de commutation (42) peut être tourné afin de sélectionner l'organe de commutation (44) correspondant au rapport de destination (Z) alors que le rapport de départ (S) est encore enclenché.

3. Boîte de vitesses à rapports étagés selon la revendication 1 ou 2, **caractérisée en ce qu'**à chaque ergot de commutation (48, 50) est associé un contour fonctionnel (64, 66) sur l'arbre de commutation (42), et chaque organe de commutation (44, 46) présente un contour opposé (68, 70), un élément de couplage (72, 74) étant placé à chaque fois entre les contours (64-68, 66-70).

4. Boîte de vitesses à rapports étagés selon la revendication 2 et 3, **caractérisée en ce que** les contours (64-68, 66-70) sont conformés de telle manière que lors d'un déplacement axial de l'arbre de commutation (42) pour enclencher le rapport de destination (Z), le rapport de départ (Z) est d'abord désenclenché.

5. Boîte de vitesses à rapports étagés selon la revendication 3 ou 4, **caractérisée en ce que** les contours (64-68, 66-70) sont conformés de telle manière qu'avec un rapport (S) enclenché, tous les autres rapports ne peuvent pas s'enclencher.

6. Boîte de vitesses à rapports étagés selon l'une des revendications 3 à 5, **caractérisée en ce que** les éléments de couplage (72, 74) sont montés fixement sur le boîtier d'une manière mobile transversalement à l'axe (43) de l'arbre de commutation.

7. Boîte de vitesses à rapports étagés selon la revendication 6, **caractérisée en ce que** les éléments d'accouplement (72, 74) sont précontraints de manière élastique en direction du contour opposé correspondant (68, 70) sur l'organe de commutation (44, 46).

8. Boîte de vitesses à rapports étagés selon l'une des revendications 3 à 7, **caractérisée en ce que** les contours opposés (68, 70) présentent chacun un évidement en V (78) dont l'axe médian s'étend transversalement à l'axe (43) de l'arbre de commutation.

9. Boîte de vitesses à rapports étagés selon l'une des revendications 3 à 8, **caractérisée en ce que** les contours fonctionnels (64, 66) présentent chacun un évidement en V (76) associé à la position neutre (N), dont l'axe médian s'étend transversalement à l'axe (43) de l'arbre de commutation.

10. Boîte de vitesses à rapports étagés selon l'une des revendications 3 à 9, **caractérisée en ce que** les contours fonctionnels (64, 66) de l'arbre de commutation (42) présentent chacun un évidement longitudinal (80), l'élément de couplage (72, 74) s'engageant, quand le rapport est enclenché, dans l'évidement longitudinal (80) du contour fonctionnel (64, 66) qui est associé à l'organe de commutation (44, 46) associé au rapport enclenché.

11. Procédé de changement d'un rapport d'une boîte de vitesse (15) à rapports étagés de type engrenage réducteur, en particulier pour véhicules motorisés, la boîte de vitesses (15) présentant un dispositif de commutation (40) servant à enclencher et désenclencher des rapports de la boîte de vitesses à rapports étagés (15), le dispositif de commutation (40) présentant un arbre de commutation (42) rotatif et mobile axialement qui est placé parallèlement à des arbres (16, 20, 30) de la boîte de vitesses (15), et le procédé de changement d'un rapport de départ (S) à un rapport de destination (Z), auquel est associé un autre organe de commutation (44° que le rapport de départ (S), comportant les étapes suivantes :
a) déplacement de l'arbre de commutation (42) jusqu'à une position neutre (N) sans désenclencher le rapport de départ (S),
b) rotation de l'arbre de commutation (42) jusqu'à ce que la position de rotation corresponde à l'autre organe de commutation (44), et
c) déplacement de l'arbre de commutation (52), le rapport de départ (S) étant désenclenché et le rapport de destination (Z) étant enclenché.
